# EUROPÄISCHE PATENTSCHRIFT

(11) **EP 4 155 105 B1**
(45) Veröffentlichungstag und Bekanntmachung des Hinweises auf die Patenterteilung: **16.09.2026**
(21) Anmeldenummer: 21199482.7
(22) Anmeldetag: 28.09.2021
(51) Int. Cl.: B60K 7/00, B60K 17/04

(54) **NUTZFAHRZEUG**
COMERCIAL VEHICLE
VEHICULE UTILITAIRE

(43) Veröffentlichungstag der Anmeldung: 29.03.2023
(73) Patentinhaber: Meritor Electric Vehicles Germany GmbH, 90441 Nürnberg (DE)
(72) Erfinder: Schramm, Marco, 90409 Nürnberg (DE)
(74) Vertreter: Wittmann, Ernst-Ulrich

(56) Entgegenhaltungen:
- EP-A1- 0 249 807
- EP-A2- 1 329 352
- WO-A1-01/03963
- DE-A1- 10 126 340
- DE-C1- 4 421 425

## Beschreibung

Die Erfindung betrifft ein Nutzfahrzeug mit je einer Radanordnung zugeordneten Getriebe-Motor-Einheit.

Nutzfahrzeuge, wie Busse und Lastkraftwagen, werden üblicherweise durch Verbrennungskraftmaschinen, dynamoelektrische Maschinen oder hybride Kombinationen von beiden angetrieben. Bei den elektrisch angetriebenen Nutzfahrzeugen gibt es Zentralmotorkonzepte, die eine Antriebsachse direkt oder über ein vorgelagertes Getriebe antreiben. Dies geschieht jeweils über ein mechanisches Achsdifferenzial. Elektrisch angetriebene Nutzfahrzeuge können auch über elektrische Achsen, die pro Radseite einen Motor aufweisen, angetrieben werden.

Dabei weisen Radlager, Getriebelager und dynamoelektrische Maschinen jeweils eine eigene Lagerung mit ihren notwendigen Freiheitsgraden auf. Die dynamoelektrische Maschine wird rotorseitig üblicherweise dabei über eine Kupplung mit einer Getriebeeingangswelle und statorseitig mit einem Achsgehäuse verbunden.

Die zusätzlichen Radial- und Axiallagerstellen der dynamoelektrischen Maschine stellen dabei aber eine mechanische Überbestimmung der Antriebsachse dar, so dass die Kupplung zwischen Rad und Motorenwelle bzw. Rotorwelle dementsprechend flexibel ausgeführt sein muss.

Die EP 1 329 352 A2 zeigt ein Nutzfahrzeug gemäß dem Oberbegriff des unabhängigen Anspruchs 1. Weiterer Stand der Technik ist in der WO 01 / 03 963 A1, EP 0 249 807 A1, DE 4 421 425 C1 und DE 101 26 340 A1 diskutiert.

Ausgehend davon liegt der Erfindung die Aufgabe zugrunde ein Nutzfahrzeug die einen einfachen, kompakten Aufbau aufweist und die oben genannten Nachteile vermeidet.

Die Lösung der gestellten Aufgabe gelingt durch ein Nutzfahrzeug mit je einer Radanordnung zugeordneten Getriebe-Motor-Einheit, wobei der Motor einen Stator und einen Rotor aufweist, wobei der Rotor über ein Getriebe mit der jeweiligen Radanordnung drehmomentübertragend verbunden ist, wobei der Rotor jeweils fliegend gelagert ist. Ein Achsgehäuse nimmt das Getriebe und den Motor auf und bildet so die Getriebe-Motor-Einheit aus.

Erfindungsgemäß werden die dynamoelektrischen rotatorischen Maschinen lagerlos ausgeführt, also fliegend gelagert, so dass die Lagerung des Getriebes zusätzlich die rotierenden Aktivteilkomponenten der elektrischen Maschine übernimmt. Als Aktivteilkomponenten werden dabei das Blechpaket des Rotors verstanden in das Permanentmagnete und/oder ein elektrisch leitender Käfig eingebettet sind.

Erfindungsgemäß ist somit die Lagerung einer Getriebeeingangswelle so auszulegen, dass die zusätzlich eingetragenen mechanischen Lasten des Rotors der dynamoelektrischen Maschine mit aufgenommen werden. Weiterhin ist dabei besonders vorteilhaft, wenn das zusätzliche Gewicht und Trägheitsmoment des Rotors möglichst gering sind.

Vorteilhafterweise sind dabei die Aktivteile des Rotors auf einer gewichtsoptimierten Rotornabe positioniert, der das Drehmoment auf die Welle überträgt, ohne dabei selbst ein großes Trägheitsmoment und große Massen aufzuweisen.

Der Rotor der dynamoelektrischen Maschine wird dabei direkt auf die Getriebeeingangswelle drehfest aufgebracht, wobei der Stator der dynamoelektrischen Maschine mit einem Achsgehäuse mechanisch verbunden ist.

Die drehfeste Verbindung wird beispielsweise durch an sich bekannte Welle-Nabe-Verbindungen gewährleistet. Der Stator der dynamoelektrischen Maschine wird beispielsweise über eine Schrumpfsitz im Achsgehäuse untergebracht. Das Achsgehäuse kann insbesondere im Bereich des Stators auch als Flüssig-
keitskühlmantel ausgeführt sein. Das Achsgehäuse nimmt dabei das Getriebe und den Motor auf und bildet so eine Getriebe-Motor-Einheit.

Damit kann nunmehr auf eine flexible Kupplung zwischen Getriebe und dynamoelektrischer Maschine verzichtet werden, wobei sich insbesondere erfindungsgemäß damit auch Anforderungen an die mechanischen Toleranzen, den benötigten Bauraum und auch das Gewicht des Antriebes reduzieren lassen.

In einer Ausführung ist das Getriebe ein Untersetzungsgetriebe, so dass das Drehmoment, das am Rad "ankommt" im selben Maße gesteigert wird, wie die Drehzahl verringert wird. Dabei bleibt selbstverständlich die übertragene Leistung von der dynamoelektrischen Maschine zum Rad gleich.

In einer weiteren Ausführung ist der Rotor gewichtsoptimiert ausgelegt, so dass die Lagerung des Getriebes, die erfindungsgemäß die Lagerung des Rotors übernimmt, nicht überlastet ist. Dies wird insbesondere durch eine speichenartige Tragstruktur des Aktivteils des Rotors oder des Rotors erreicht. Dabei sind die Aktivteile, wie Blechpaket des Rotors, in das Permanentmagnete und/oder ein elektrisch leitender Käfig eingebettet sind auf der speichenartigen Tragstruktur drehfest fixiert du mit einer Getriebeeingangswelle verbunden.

Die axiale Ausdehnung des Rotors sowie der Abstand zur Lagerung sollen möglichst klein im Verhältnis zur Stützweite der Lagerung der Getriebeeingangswelle sein. Insbesondere entspricht die axiale Ausdehnung des Rotors dem 0,3- bis 0,7-fachen des Durchmessers des Rotors entspricht.

Vorteilhaft ist dabei, wenn die axiale Ausdehnung des Rotors möglichst gering ist, also ungefähr dem halben Durchmesser des Rotors entspricht.

Nutzfahrzeuge sind vor allem elektrische angetriebene Busse oder Trucks für den Straßenverkehr oder als Spezialfahrzeuge z.B. in Minen. Grundsätzlich eignet sich die Erfindung auch für alle elektrisch angetriebenen Fahrzeuge mit einer elektrischen Achse und deren zwei Getriebe-Motor-Einheiten, somit auch für PKWs.

Der Gegenstand der Erfindung ist sowohl auf Innenläufermaschinen als auch Außenläufermaschinen anzuwenden, da die Lagerung des Rotors komplett von der Lagerung des Getriebes übernommen wird. Es ist lediglich darauf zu achten, das Gewicht des Rotors möglichst gering zu halten, sowie die axialen Ausdehnungen, insbesondere den Abstand zur Lagerung im Verhältnis zur Stützweite der Lagerung klein zu halten sind. Durch die lagerlose Integration der dynamoelektrischen Maschine in das Achsgehäuse lassen sich Bauraum, Gewicht und damit auch Kosten gegenüber vergleichsweisen Antriebskonzepten einsparen. Dadurch ist es möglich, deutlich mehr Motorleistung und auch Drehmoment im verfügbaren Bauraum eines Nutzfahrzeugs zu realisieren.

Es sind dadurch auch E-Busse bis 30t Gesamtgewicht mit einer elektrischen Achse zu realisieren. Herkömmliche Lösungen mit Motorlagerung benötigen zwei Lagerschilde und Kugellager, die auch gewartet, insbesondere geschmiert werden müssen.

Die erfindungsgemäße Nutzfahrzeug hat vorteilhafterweise wartungsfrei ölgeschmierte Lager im Getriebe.

Die Erfindung sowie weitere vorteilhafte Ausgestaltungen der Erfindung werden anhand prinzipiell dargestellter Ausführungsbeispiele näher erläutert, darin zeigen:
- FIG 1: eine teilperspektivische Darstellung eines Antriebs eines Rades,
- FIG 2: einen prinzipiellen Längsschnitt einer Motor-Getriebe-Einheit,
- FIG 3: eine prinzipielle Anordnung einer elektrischen Achse in einem Nutzfahrzeug,
- FIG 4 bis 6: trägheitsarme Ausführungen eines Rotors.

Es sei angemerkt, dass sich Begriffe wie "axial", "radial", "tangential" etc. auf die in der jeweiligen Figur bzw. im jeweils beschriebenen Beispiel zum Einsatz kommende Achse 7 beziehen. Mit anderen Worten beziehen sich die Richtungen axial, radial, tangential stets auf eine Achse 7 des Rotors 5 und damit auf die entsprechende Symmetrieachse des Stators 2. Dabei beschreibt "axial" eine Richtung parallel zur Achse, "radial" beschreibt eine Richtung orthogonal zur Achse, auf diese zu oder auch von ihr weg, und "tangential" ist eine Richtung, die in konstantem radialem Abstand zur Achse und bei konstanter Axialposition kreisförmig um die Achse herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 5 und Stator 4, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit ihren Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen.

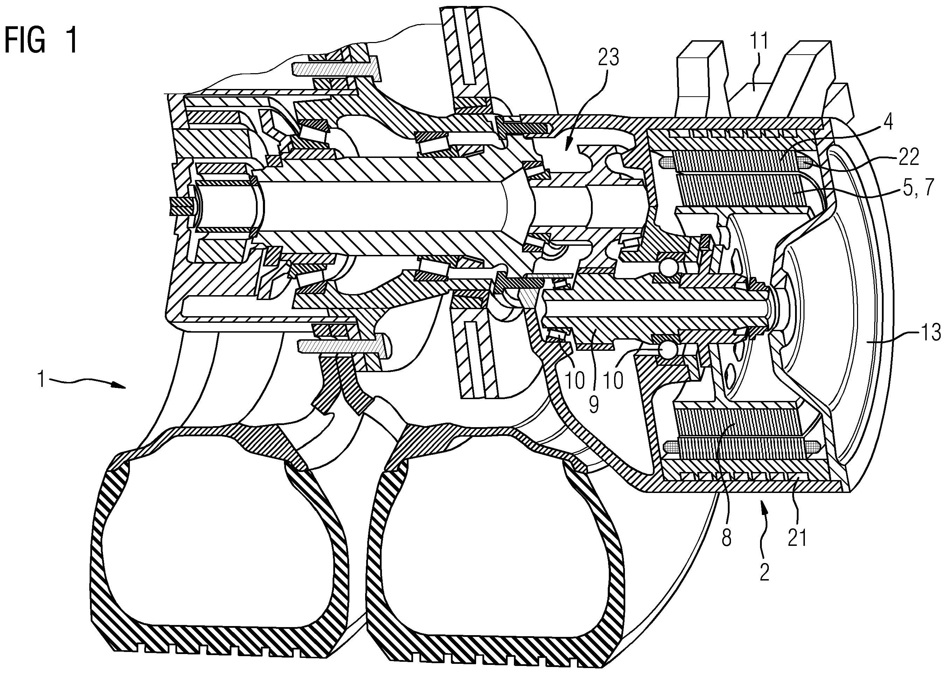

FIG 1 zeigt in einer teilperspektivischen Darstellung einen Antrieb einer Radanordnung 1 durch eine Getriebe-Motor-Einheit 2. Die Radanordnung 1 kann dabei ein einzelnes Rad oder ein Zwillingsreifen sein. Das Getriebe kann ein ein- oder mehrstufiges Getriebe oder ein Planetengetriebe sein - in diesem Fall ist es ein einstufiges Getriebe. Die dynamoelektrische Maschine 3 kann eine permanenterregte Synchronmaschine oder ein Asynchronmotor mit einem Käfigläufer oder ein Asynchronmotor einer elektrischen Erregung mittels Schleifringen sein.

Die dynamoelektrische Maschine 3 ist in einem Achsgehäuse untergebracht, wobei der Stator 2 und/oder das Gehäuse Mittel zur Flüssigkeitskühlung 21 aufweisen.

In dieser Ausführung ist das Blechpaket des Rotors 5 auf einer Tragstruktur 6 fixiert, die trägheitsarm ausgeführt ist. Dies kann insbesondere speichenförmig sein. Diese Tragstruktur 6 ist drehfest mit einer Getriebeeingangswelle 9 verbunden, um das Drehmoment des Motors 3 in das Getriebe einzuleiten und letztlich als Antriebsmoment der Radanordnung zur Verfügung zu stellen. Der Rotor 5 ist dabei fliegend gelagert, d.h. er weist keine explizite Lagerung auf, sondern die Lagerung 10 der Getriebeeingangswelle 9 stützt den Rotor 5.

Über eine Getriebeausgangswelle 12, die mit der Radanordnung drehfest verbunden ist, wird das Antriebsmoment der Radanordnung 1 zur Verfügung gestellt. Die Lagerung 15 der Getriebeausgangswelle 12 stützt sich u.a. in dem Achsgehäuse 11 ab. Die Achse 16 der Radanordnung 1 und die Achse 17 des Motors 3 sind parallel angeordnet.

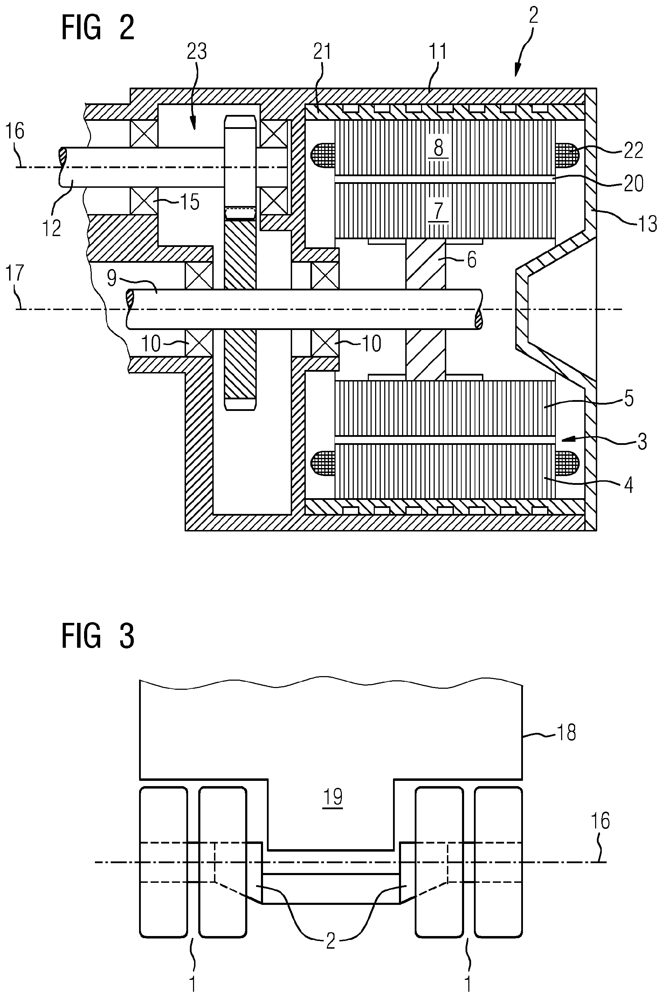

FIG 2 zeigt in einem prinzipiellen Längsschnitt die Getriebe-Motor-Einheit, die in dem Achsgehäuse 11 untergebracht ist. Das Blechpaket 7 des Rotors 5, ist dabei auf einer Tragstruktur 6 positioniert, die im wesentlichen doppel-T-förmig ausgeführt ist. Dabei ist das Mittenstück zur Reduzierung der Trägheit speichenartig ausgebildet. Zwischen dem Blechpaket 8 des Stators 4 ist dort eine Flüssigkeitskühlmantel vorgesehen. Der Motorraum ist von dem Getrieberaum getrennt, so das Getriebe mit Öl versehen sein kann, während der Motorraum eine, insbesondere geschlossene Luftkühlung aufweist.

Die in FIG 2 gezeigten Lager sind nur beispielhaft als Kugellager ausgeführt. Je nach Ausführung der elektrischen Achse sind auch andere Lager oder Lageranordnungen mit den jeweiligen Wälzkörpern möglich, die als Festlager oder Loslager fungieren können. Dies sind u.a. Schrägkugellager (einreihig, zweireihig ...), Zylinderrollenlager oder Tonnenlager. Bei paarweisem Einbau können diese in O-Anordnung oder X-Anordnung angeordnet sein.

FIG 3 zeigt eine elektrische Achse mit zwei Getriebe-Motor-Einheiten, die jeweils eine Radanordnung 1 antreiben. Durch den erfindungsgemäßen Aufbau kann nunmehr eine kompakte Anordnung bereitgestellt werden, die somit das Nutzvolumen eines Nutzfahrzeugs erhöht. Insbesondere kann durch dies Anordnung der Mittelgang bei einem E-Bus 18 breiter ausgestaltet sein.

Im Folgenden werden weitere Möglichkeiten einer trägheitsarmen Ausführung des Rotors 5 beschrieben.

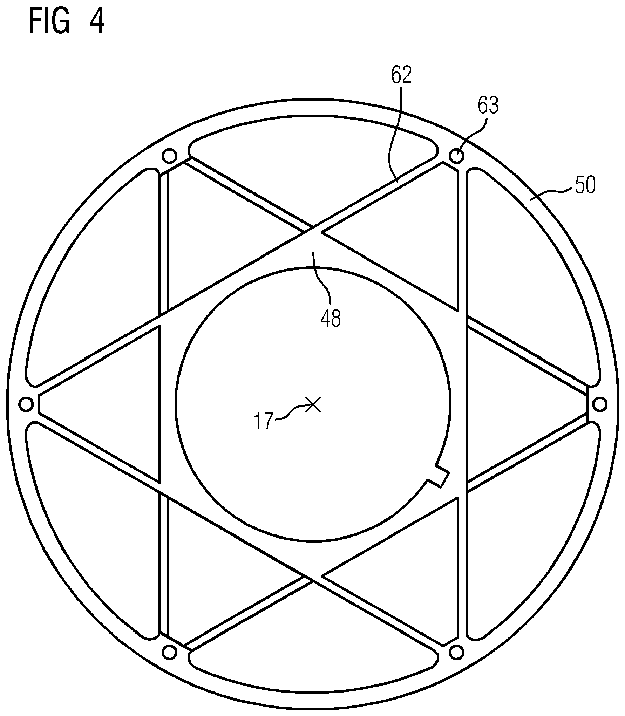

Die Darstellung gemäß FIG 4 zeigt im Querschnitt den Rotor 5 der dynamoelektrischen Maschine 3. Der Rotor 5 weist im Außenbereich eine kreisförmige Struktur auf. Die als äußerer Kreisring bezeichnete kreisförmige Struktur dient als Mittel zur Momentenaufnahme am Rotor 5. Momente ergeben sich durch Mittel zur Erregung des Rotors 5. Befinden sich diese Mittel bereits am Rotor, was in FIG 4 nicht der Fall ist, so sind diese dann Teil des Rotors 5. Mittel zur Erregung sind beispielhaft Permanentmagnete oder elektrische Leiter, welche bei Asynchronmaschinen beispielsweise einen Käfig ausbilden oder bei Synchronmaschinen einen gespeisten Strom führen. Im Betrieb der dynamoelektrischen Maschine 3 wird auf diese Mittel zur Erregung ein Moment bzw. eine Kraft ausgeübt, welche sich auf den Rotor 5 überträgt, da die Mittel zur Erregung Teil des Rotors 5 sind. Als Mittel zur Momentenaufnahme am Läufer dient der in FIG 4 dargestellte äußere Kreisring, welcher das Mittel zur Momentenaufnahme darstellt. Das Mittel zur Momentenaufnahme am Rotor 5 dient auch als Bereich, welcher den Fluss führt. Dieser Bereich wird in FIG 4 als Flussleitring 50 bezeichnet, welcher den äußeren Ring darstellt und mit dem Mittel zur Momentenaufnahme am Rotor 5 korrespondiert.

Da der Rotor 5 in dieser Ausführung als Aneinanderreihung mehrerer Rotorbleche ausführbar ist, sind Mittel vorzusehen, diese Rotorbleche miteinander zu verbinden. Eine derartige Verbindung ist u.a. über Haltelöcher 16 ausführbar, indem durch diese z.B. ein Haltestab geführt ist, mit dessen Hilfe Rotorbleche aneinandergehalten werden. Haltelöcher 16 sind am inneren Radius des Flussleitrings 50 verteilt. Dabei ist eine symmetrische Verteilung vorteilhaft, um auftretende Kräfte auch symmetrisch aufzunehmen.

Ist auf das Mittel zum Momentenaufnahme am Rotor 5 ein Moment ausgeübt, so ist dieses auf Getriebeeingangswelle 9 in zu übertragen. Kräfte sind in den Innenbereich des Rotors 5 zu führen. Gemäß FIG 4 geschieht dies über sekantenartige Stege 62. FIG 4 zeigt eine Ausführung mit einer Anzahl von sechs Sekanten, welche im Bereich der bei Haltelöchern 63 eine Verbindung mit dem Flussleitring 50 aufweisen und im inneren des Rotors 5 ein Polygon ausbilden. Das Polygon ist als Polygonring 48 gestaltet. In dessen mittleren kreisrunden Aussparung befindet sich die Getriebeeingangswelle 9. Auftretende Momente von Mitteln zur Erregung werden über das Mittel zur Momentenaufnahme am Rotor 5 auf die sekantenartigen Stege 62 übertragen. Dabei auftretende Kräfte werden dann weiterhin durch diese sekantenartige Stege 62 ins Innere zum Polygonring 48 geführt. Beispielsweise über eine Passfederkombination ist der Polygonring 48 mit der Getriebeeingangswelle 9 drehfest verbindbar.

Eine Kraftübertragung zwischen dem Polygonring 48 und der Getriebeeingangswelle 9 ist nicht alleine auf Passfederkombination beschränkt, da auch andere Mechanismen zur Kraft-/Momentenübertragung anwendbar sind. Dies sind beispielhaft stoffschlüssige Verbindungen, z.B. durch Kleben oder Schweißen, oder formschlüssige Verbindungen wie bei Passfedern allerdings in einer anderen geometrischen Form, wie z.B. Polygone oder kraftschlüssige Verbindungen, in denen beispielsweise der Rotor 5 auf die Getriebeeingangswelle 9 aufgeschrumpft ist.

Durch die Verwendung sekantenartiger Stege 62 werden Mittel zur Trägheitsminderung ausgebildet. Die damit verbundene Gewichtsreduktion verändert in positiver Weise das Trägheitsmoment, so dass eine dynamoelektrische Maschine 3 mit dem entsprechenden Rotor 5 u.a. Dynamik gewinnt. Ein verkleinertes Gewicht, d.h., eine geringere Masse eines Körpers reduziert die Trägheit des Körpers. Die Trägheitsminderung ergibt sich nicht allein aus der allgemeinen Gewichtsreduktion, sondern insbesondere auch aus der Lage und Position derjenigen Stellen des Rotors, an welchen eine Gewichtsreduktion erfolgt.

Im vorliegenden Beispiel der FIG 4 ist der Rotor 5 das Drehsystem. Da insbesondere an den äußeren Seiten des Rotors durch die außenliegenden sekantenartigen Stege 62 Aussparungen ermöglicht sind, ergibt sich eine hohe Minderung des Trägheitsmoments des gesamten Rotors 5.

Der Rotor 5 gemäß FIG 4 ist wie beschrieben funktionsmäßig in drei Teile geteilt. Zum einen in den Teil, der den magnetischen Fluss führt, die Magnete trägt und als Flussleitring 50 bezeichnet ist. Zum anderen in den Teil, der das Moment von den Magneten bzw. der Erregung oder den Rückschlusskomponenten zur Welle überträgt und in FIG 4 durch die sekantenartigen Stege 62 repräsentiert ist. Den dritten Teil einer Grobuntergliederung bildet die Verbindung zur Getriebeeingangswelle 9, welche in der FIG 4 als Polygonring 48 bezeichnet ist und das Mittel zur Kraftübertragung zwischen Rotor 5 und Getriebeeingangswelle 9 bildet.

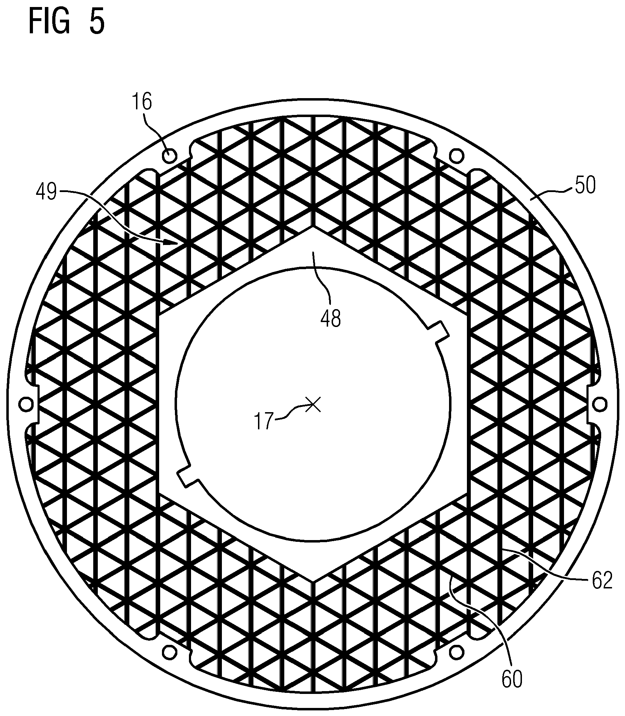

Die Darstellung gemäß FIG 5 zeigt den Querschnitt Rotors 5 mit einem Mittel zur Momentenaufnahme am Rotor 5, einem Flussleitring 50, Haltelöcher 63 und einem Polygonring 48. Im Vergleich zur FIG 4 sind die dortigen sekantenartigen Stege 62 nun in eine Wabenstruktur 49 überführt. Die Kraftübertragung vom Polygonring 48 auf die Getriebeeingangswelle 9 erfolgt u.a. auch über eine Passfederkombination. Durch die Erhöhung der Anzahl der Stege und Teilstege, die diese Wabenstruktur 49 bilden, ist die Festigkeit des Rotors 5 erhöhbar. Durch die größere Anzahl an sekantenartigen Stegen und/oder Teilstegen ist ein homogenerer Kraftübergang auf die Stege/Teilstege bzw. von diesen auf den Polygonring 48 erzielbar. Somit ist eine Reduzierung der Materialstärke des Flussleitringes 50 und/oder des Polygonringes 48 ermöglicht. Dies wiederum reduziert das Trägheitsmoment.

Durch die Ausgestaltung von Stegen und Teilstegen bzw. auch der Wahl des Materials, aus welchen die Stege bestehen ist die Steifigkeit beeinflussbar. Wird eine Wabenstruktur 49 mit flexiblen Stegen ausgeführt, so wirkt der Rotor 5 als Dämpfer bzw. Feder zwischen Motor und der vom Motor angetriebenen Last. Die Flexibilität der Wabenstruktur 49 kann sich auch aus einer Flexibilität der Verbindungsstellen zwischen den Stegen ergeben.

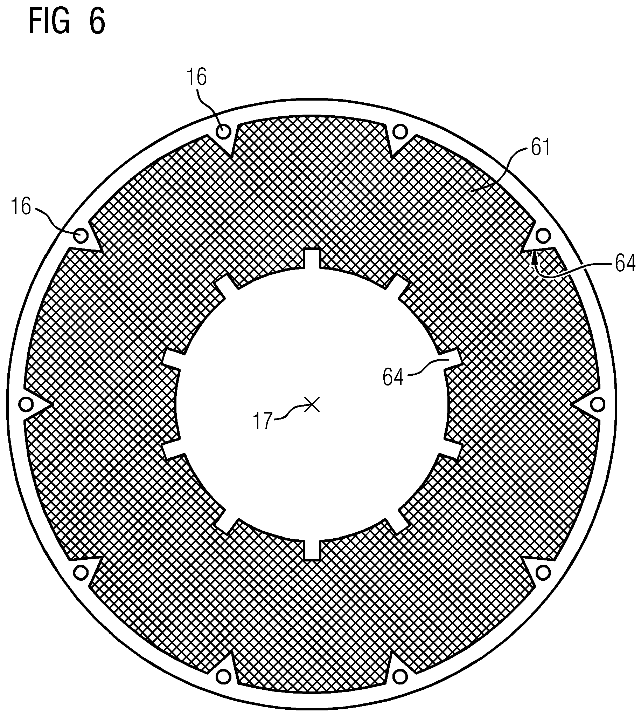

Die Darstellung gemäß FIG 6 zeigt einen Rotor 5 mit Mitteln zur Momentenaufnahme, Haltelöchern 63, wie in vorangegangenen Figuren. Die Wabenstruktur 49 gemäß FIG 5 ist in FIG 6 in einer vorteilhaften Ausführungsform als wabenartige Schaumstruktur 61 ausgeführt. Der Unterschied zur FIG 5 besteht darin, dass sich die Kammern der Waben enorm verkleinert haben und verschlossen sind. Gerade Schäume sind preiswerte Materialien und in ihrer Eigenschaft sehr verschieden. Auf diese Weise ist je nach Anwendungsfall ein fester oder starrer Schaum mit geringen oder keinen Feder- bzw. Dämpfungseigenschaften nutzbar. Ein weicher, flexibler Schaum weist starke bzw. große Feder- bzw. Dämpfungseigenschaften auf. Die Kraftübertragung vom Mittel zur Momentenaufnahme am Rotor 5 zum Schaum erfolgt beispielhaft über formschlüssige Mittel 64 zur Kraftübertragung, welche im Außenbereich in FIG 6 als Keile ausgeführt sind. Die Kraftübertragung zu der in FIG 6 nicht dargestellten Getriebeeingangswelle 9 erfolgt über an sich bekannte Welle-Nabe-Verbindungen.

Auf oder in dem Flussleitring 50 sind Permanentmagnete positioniert, welche hier das Mittel zur Erregung darstellen. Außenliegende Permanentmagnete sind vorteilhafter Weise über eine Bandage mit dem Flussleitring 50 verbunden. Der Flussleitring kann als Blechpaket ausgebildet sein. Die Bandage nimmt Fliehkräfte der Permanentmagnete bei Drehbewegungen auf, die auf der Oberfläche des Flussleitrings angeordnet.

## Patentansprüche

1. Nutzfahrzeug mit je einer Radanordnung (1) zugeordneten Getriebe-Motor-Einheit (2), wobei der Motor (3) einen Stator (4) und einen Rotor (5) aufweist, wobei der Rotor (5) über ein Getriebe (23) mit der jeweiligen Radanordnung (1) drehmomentübertragend verbunden ist, **dadurch gekennzeichnet, dass** der Rotor (5) jeweils fliegend gelagert ist, und die Lagerung des Rotors (5) von der Lagerung des Getriebes (23) übernommen wird, und wobei ein Achsgehäuse (11) das Getriebe (23) und den Motor (3) aufnimmt und so die Getriebe-Motor-Einheit (2) ausbildet.

2. Nutzfahrzeug nach Anspruch 1, **dadurch gekennzeichnet, dass** das Getriebe (23) ein Untersetzungsgetriebe ist.

3. Nutzfahrzeug nach Anspruch 1 oder 2, **dadurch gekennzeichnet, dass** der Rotor (5) gewichtsoptimiert ausgelegt ist.

4. Nutzfahrzeug nach Anspruch 3, **dadurch gekennzeichnet, dass** der Rotor (5) eine speichenartige Tragstruktur (6) seines Blechpakets (7) aufweist.

5. Nutzfahrzeug nach Anspruch 4, **dadurch gekennzeichnet, dass** das Blechpaket (7) des Rotors (5) und/oder die Tragstruktur trägheitsarm, insbesondere speichenartig oder wabenförmig ausgeführt ist.

6. Nutzfahrzeug nach einem der vorhergehenden Ansprüche, **dadurch gekennzeichnet, dass** die axiale Ausdehnung des Rotors (5) dem 0,3- bis 0,7-fachen des Durchmessers des Rotors (5) entspricht.

7. Nutzfahrzeug nach einem der vorhergehenden Ansprüche, **dadurch gekennzeichnet, dass** eine übergeordnete Regelung des elektrischen Antriebs des Nutzfahrzeugs zumindest ein elektrisches Differential bildet.

## Claims

1. A commercial vehicle with a transmission-motor unit (2) associated with each wheel assembly (1), wherein the motor (3) has a stator (4) and a rotor (5), wherein the rotor (5) is connected to the respective wheel assembly (1) via a transmission (23) for torque transmission, **characterized in that** the rotor (5) is mounted in a cantilevered manner respectively, and the bearing arrangement of the rotor (5) is provided by the bearing arrangement of the transmission (23), and wherein an axle housing (11) accommodates the transmission (23) and the motor (3) and thereby forms the transmission-motor unit (2).

2. The commercial vehicle according to claim 1, **characterized in that** the transmission (23) is a reduction transmission.

3. The commercial vehicle according to claim 1 or 2, **characterized in that** the rotor (5) has a weight-optimized form.

4. The commercial vehicle according to claim 3, **characterized in that** the rotor (5) has a spoke-like support structure (6) for its laminated core (7).

5. The commercial vehicle according to claim 4, **characterized in that** the laminated core (7) of the rotor (5) and/or the support structure is configured to have low inertia, in particular having a spoke-like or honeycomb form.

6. The commercial vehicle according to any of the preceding claims, **characterized in that** the axial extent of the rotor (5) corresponds to 0.3 to 0.7 times the diameter of the rotor (5).

7. The commercial vehicle according to any of the preceding claims, **characterized in that** a higher-level control system for the electric drive of the commercial vehicle forms at least one electric differential.

## Revendications

1. Véhicule utilitaire doté d'une unité transmission-moteur (2) associée à chaque ensemble de roue (1), dans lequel le moteur (3) présente un stator (4) et un rotor (5), dans lequel le rotor (5) est relié de manière à transmettre le couple de rotation à l'ensemble de roue (1) respectif via une transmission (23), **caractérisé en ce que** le rotor (5) est monté respectivement en porte-à-faux, et la suspension du rotor (5) est assurée par la suspension de la transmission (23), et dans lequel un boîtier d'essieu (11) accueille la transmission (23) et le moteur (3) et forme ainsi l'unité transmission-moteur (2).

2. Véhicule utilitaire selon la revendication 1, **caractérisé en ce que** la transmission (23) est un réducteur de vitesses.

3. Véhicule utilitaire selon la revendication 1 ou 2, **caractérisé en ce que** le rotor (5) est conçu de manière à être optimisé en termes de poids.

4. Véhicule utilitaire selon la revendication 3, **caractérisé en ce que** le rotor (5) présente une structure porteuse en forme de rayons (6) pour son noyau feuilleté (7).

5. Véhicule utilitaire selon la revendication 4, **caractérisé en ce que** le noyau feuilleté (7) du rotor (5) et/ou la structure porteuse est faible en inertie, en particulier est réalisé en forme de rayons ou en nid d'abeilles.

6. Véhicule utilitaire selon l'une quelconque des revendications précédentes, **caractérisé en ce que** l'extension axiale du rotor (5) correspond à 0,3 à 0,7 fois le diamètre du rotor (5).

7. Véhicule utilitaire selon l'une quelconque des revendications précédentes, **caractérisé en ce qu'**une régulation de niveau supérieur de l'entraînement électrique du véhicule utilitaire forme au moins un différentiel électrique.
